# EUROPEAN PATENT APPLICATION

(11) **EP 4 053 978 A1**
(43) Date of publication of application: **07.09.2022**
(21) Application number: 21775331.8
(22) Date of filing: 03.03.2021
(51) Int. Cl.: H01M 50/20, H01M 10/659, H01M 10/658, H01M 10/627, H01M 10/613, H01M 50/24

(54) **BATTERY RACK AND POWER STORAGE DEVICE COMPRISING SAME**

(30) Priority: 26.03.2020 KR 20200037032
(71) Applicant: LG Energy Solution, Ltd., Seoul 07335 (KR)
(72) Inventor: NA, Jong-Seung, Daejeon 34122 (KR); PARK, Sang-Jun, Daejeon 34122 (KR); KANG, Dal-Mo, Daejeon 34122 (KR); BAE, Gyu-Jong, Daejeon 34122 (KR); CHOI, Yong-Seok, Daejeon 34122 (KR)
(74) Representative: Plasseraud IP
(86) International application number: PCT/KR2021/002635
(87) International publication number: WO 2021/194115

(57) **Abstract**

Disclosed is a battery rack for effectively preventing the spread of a fire or heat to adjacent battery packs when the fire or thermal runaway occurs in any of a plurality of battery packs. To achieve the above-described object, the battery rack according to the present disclosure includes a plurality of battery packs; and a rack case having a receiving space with an open structure in which the plurality of battery packs is vertically mounted at intervals and placed in vertical communication with one another, wherein a stopper is provided in the receiving space and disposed between the plurality of battery packs, spaced apart from the plurality of battery packs, and is configured to suppress volume expansion of the battery pack when the volume of the battery pack expands.

## Description

### TECHNICAL FIELD

The present disclosure relates to a battery rack and an energy storage system comprising the same, and more particularly, to a battery rack for effectively preventing the spread of a fire or heat to adjacent battery packs when the fire or thermal runaway occurs in any of a plurality of battery packs.

The present application claims the benefit of Korean Patent Application No. 10-2020-0037032 filed on March 26, 2020 with the Korean Intellectual Property Office, the disclosure of which is incorporated herein by reference in its entirety.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging may be done whenever it is convenient, the self-discharge rate is very low and the energy density is high.

A lithium secondary battery primarily uses lithium-based oxide and a carbon material as a positive electrode active material and a negative electrode active material respectively. The lithium secondary battery includes an electrode assembly including a positive electrode plate and a negative electrode plate coated with the positive electrode active material and the negative electrode active material respectively with a separator interposed between the positive electrode plate and the negative electrode plate, and a packaging or a battery pouch case in which the electrode assembly is hermetically received together with an electrolyte solution.

Recently, secondary batteries are widely used in not only small devices such as portable electronic devices, but also medium- and large-scale devices such as vehicles and energy storage systems. For use in medium- and large-scale device applications, many secondary batteries are electrically connected to increase the capacity and output. In particular, pouch-type secondary batteries are widely used in medium- and large-scale devices due to their easy-to-stack advantage.

More recently, with the use as a source of energy and the growing need for large-capacity structures, there is an increasing demand for a battery rack including a plurality of secondary batteries electrically connected in series and/or in parallel, a battery pack in which the plurality of secondary batteries is received, and a battery management system (BMS).

In general, the battery rack includes a metal rack case to protect a plurality of battery packs from external impacts or receive and store the battery packs. Recently, with the increasing demand for high capacity battery racks, the demand for battery racks including a plurality of battery packs is increasing.

However, when thermal runaway or a fire occurs in a secondary battery of any one of the plurality of battery packs of the battery rack, thermal runaway or fire propagation may occur due to the heat transfer to adjacent battery packs, so there have been many attempts to prevent it.

In particular, the battery pack in which thermal runaway or a fire occurred may contact adjacent battery packs due to the volume expansion, and such contact rapidly increases the heat transfer rate and accelerates the spread of the thermal runaway or fire.

When the plurality of battery packs is arranged at great intervals, the number of battery packs that can be received in one battery rack reduces and the total energy density of the battery rack reduces, so there is a limitation in spacing the battery packs apart.

### DISCLOSURE

### Technical Problem

The present disclosure is designed to solve the above-described problem, and therefore the present disclosure is directed to providing a battery rack for effectively preventing the spread of a fire or heat to adjacent battery packs when the fire or thermal runaway occurs in any of a plurality of battery packs.

These and other objects and advantages of the present disclosure may be understood by the following description, and will be apparent from the embodiments of the present disclosure. In addition, it will be readily appreciated that the objects and advantages of the present disclosure may be realized by means set forth in the appended claims and combinations thereof.

### Technical Solution

To achieve the above-described object, a battery rack according to the present disclosure includes plurality of battery packs; and a rack case having a receiving space with an open structure in which the plurality of battery packs is vertically mounted at intervals and placed in vertical communication with one another, wherein a stopper is provided in the receiving space and disposed between the plurality of battery packs, spaced apart from the plurality of battery packs, and is configured to suppress volume expansion of the battery pack when the volume of the battery pack expands.

The rack case includes an upper wall, a lower wall, a left side wall, a right side wall and a rear wall to form the receiving space.

The stopper may have a beam shape horizontally extending from at least one of the left side wall, the right side wall or the rear wall.

The stopper may have the beam shape having a rectangular, I-shaped or H-shaped vertical cross section.

The stopper may include a body portion configured to press the battery pack when the volume of the battery pack expands, and a fixing portion coupled to at least one of the rear wall, the left side wall or the right side wall.

The rack case may further include a plurality of rack plates configured to support a bottom of each of the plurality of battery packs upwards.

The body portion of the stopper may be connected to the rack plate and have a downward stepped structure.

The rack case may further include a base member interposed between a lower surface of the battery pack and the rack plate and configured to change a phase from solid to liquid at a predetermined temperature or above.

The rack case may further include a heat shield pad disposed on or under the stopper to block thermal conduction.

The rack case may further include a cooling pad disposed on or under the stopper to absorb heat.

To achieve the above-described object, an energy storage system according to the present disclosure includes at least one battery rack.

### Advantageous Effects

According to an aspect of the present disclosure, the battery rack of the present disclosure includes the plurality of battery packs, and the rack case having the receiving space with an open structure in which the plurality of battery packs is vertically mounted at intervals and placed in vertical communication with one another, wherein the stopper configured to suppress the volume expansion of the battery pack is provided in the receiving space, so when the size of the battery pack is deformed by the volume expansion of the plurality of secondary batteries in the battery pack due to thermal runaway or a fire, the stopper may suppress the contact of the deformed battery pack with the battery pack disposed above or below, thereby preventing the spread of the thermal runaway or the fire to other battery packs due to the heat transfer from the battery pack in which thermal runaway or the fire occurred to adjacent battery packs.

Additionally, according to an aspect of an embodiment of the present disclosure, the battery rack of the present disclosure further includes the heat shield pad disposed on or under the stopper to block the thermal conduction, so the heat shield pad may suppress the heat transfer from the battery pack in which thermal runaway or a fire occurred to the battery pack disposed above or below.

Additionally, according to another aspect of the present disclosure, the battery rack of the present disclosure further includes the base member interposed between the lower surface of the battery pack and the rack plate and configured to change the phase from solid to liquid at a predetermined temperature or above, so when thermal runaway or a fire occurs in any of a plurality of battery packs, the base member becomes thinner due to the generated heat to move down the battery pack in which thermal runaway or the fire occurred. Accordingly, it is possible to prevent the contact of the battery pack of which volume expanded due to thermal runaway or the fire with adjacent battery packs, thereby effectively reducing the quantity of thermal conduction. Ultimately, it is possible to prevent the spread of thermal runaway or a fire to adjacent battery packs when thermal runaway or the fire occurs in any battery pack.

### BRIEF DESCRIPTION OF THE DRAWINGS

The accompanying drawings illustrate preferred embodiments of the present disclosure, and together with the following detailed description, serve to provide a further understanding of the technical aspects of the present disclosure. However, the present disclosure should not be construed as being limited to the drawings.
FIG. 1 is a schematic front perspective view of a battery rack according to an embodiment of the present disclosure.
FIG. 2 is a schematic front perspective view of a battery pack of a battery rack according to an embodiment of the present disclosure.
FIG. 3 is a schematic perspective view of a cell assembly of a battery pack of a battery rack according to an embodiment of the present disclosure.
FIG. 4 is a schematic front view of a battery rack according to an embodiment of the present disclosure.
FIG. 5 is a schematic front view showing volume expansion of a battery pack of a battery rack according to an embodiment of the present disclosure.
FIG. 6 is a schematic perspective view of a rack case of a battery rack according to an embodiment of the present disclosure.
FIG. 7 is a horizontal cross-sectional view taken along the line C-C' in FIG. 6, showing components of a battery rack.
FIG. 8 is a horizontal cross-sectional view of components of a battery rack according to a second embodiment of the present disclosure.
FIG. 9 is a horizontal cross-sectional view of components of a battery rack according to a third embodiment of the present disclosure.
FIG. 10 is a schematic front view of a battery rack according to a fourth embodiment of the present disclosure.
FIG. 11 is a schematic front view of a battery rack according to a fifth embodiment of the present disclosure.
FIG. 12 is a schematic front view of a battery rack according to a sixth embodiment of the present disclosure.
FIG. 13 is a horizontal cross-sectional view of components of the battery rack according to the sixth embodiment of the present disclosure.
FIG. 14 is a schematic front view of a battery rack according to a seventh embodiment of the present disclosure.
FIG. 15 is a schematic front view of a battery rack according to an eighth embodiment of the present disclosure.
FIG. 16 is a schematic front view of a battery rack according to a ninth embodiment of the present disclosure.
FIG. 17 is a schematic front view of a battery rack according to a tenth embodiment of the present disclosure.
FIG. 18 is a temperature change graph of a battery pack subjected to thermal runaway used in an experiment of the present disclosure.
FIG. 19 is a temperature change graph of a battery pack of comparative example used in an experiment of the present disclosure.
FIG. 20 is a temperature change graph of a battery pack of example used in an experiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are just a most preferred embodiment of the present disclosure, but not intended to fully describe the technical aspects of the present disclosure, so it should be understood that a variety of other equivalents and modifications could have been made thereto at the time that the application was filed.

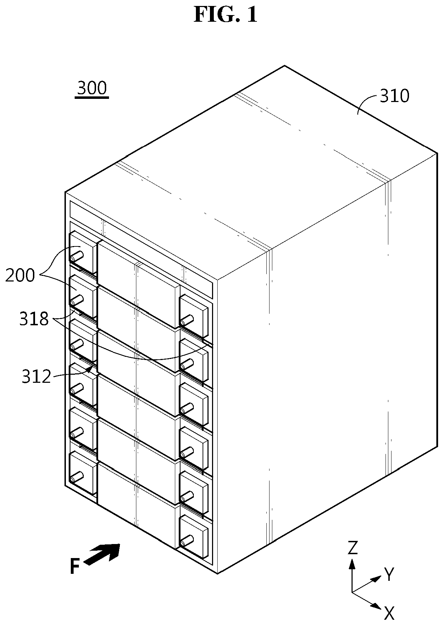

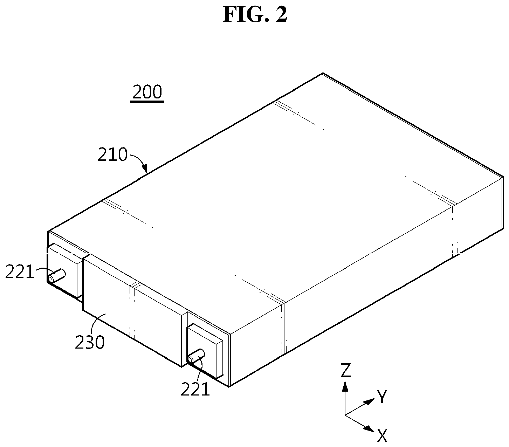

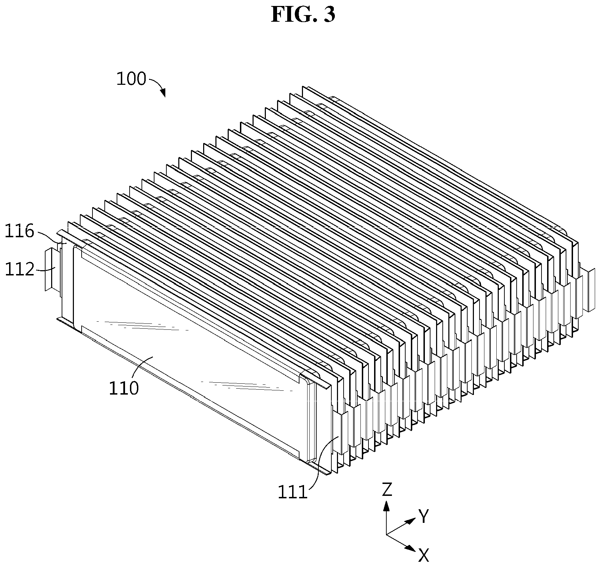

FIG. 1 is a schematic front perspective view of a battery rack according to an embodiment of the present disclosure. FIG. 2 is a schematic front perspective view of a battery pack of the battery rack according to an embodiment of the present disclosure. Additionally, FIG. 3 is a schematic front perspective view of a cell assembly of the battery pack of the battery rack according to an embodiment of the present disclosure. For reference, in FIG. 1, an X-axis direction refers to left and right directions, a Y-axis direction refers to front and rear directions, and a Z-axis direction refers to up and down directions.

Referring to FIGS. 1 to 3, the battery rack 300 of the present disclosure includes a plurality of battery packs 200 and a rack case 310.

To begin with, the plurality of battery packs 200 may be received in the rack case 310 in a vertical arrangement. Additionally, the plurality of battery packs 200 may include a pack housing 210, a module battery management system (BMS) 230, and a cell assembly 100 having a plurality of secondary batteries 110 provided in the pack housing 210 and stacked in a direction. Here, the module BMS 230 may be configured to measure the current and temperature of the battery pack 200 and control the charge/discharge of the plurality of secondary batteries 110.

Additionally, the battery pack 200 may include two external I/O terminals 221 at the front end. One of the two external I/O terminals 221 may have positive polarity, and the other may have negative polarity.

Specifically, the secondary battery 110 may be a pouch-type secondary battery 110. For example, as shown in FIG. 3, when viewed from the direction F (shown in FIG. 1), the cell assembly 100 may include 21 pouch-type secondary batteries 110 stacked side by side in the front-rear direction.

In the specification, unless otherwise specified, the up, down, front, rear, left, and right directions are defined when viewed from the direction F.

As shown in FIG. 3, when viewed from the direction F, a positive electrode lead 112 and a negative electrode lead 111 may be formed at the left and right ends with respect to the center of a pouch 116 of the secondary battery 110. That is, the positive electrode lead 112 may be provided at one end (the left end) with respect to the center of the secondary battery 110. Additionally, the negative electrode lead 111 may be provided at the other end (the right end) with respect to the center of the secondary battery 110.

However, the battery pack 200 according to the present disclosure is not limited to the above-described pouch-type secondary battery 110 and may use various types of secondary batteries 110 known at the time of filing the application.

In the following description, the 'horizontal direction' refers to a direction parallel to the ground when the battery pack 200 is placed on the ground, and may be referred to as at least one direction on a plane perpendicular to the vertical direction.

The battery pack 200 may include at least one busbar (not shown) configured to electrically connect the plurality of secondary batteries 110. Specifically, the busbar may have an electrically conductive metal, for example, copper, aluminum and nickel.

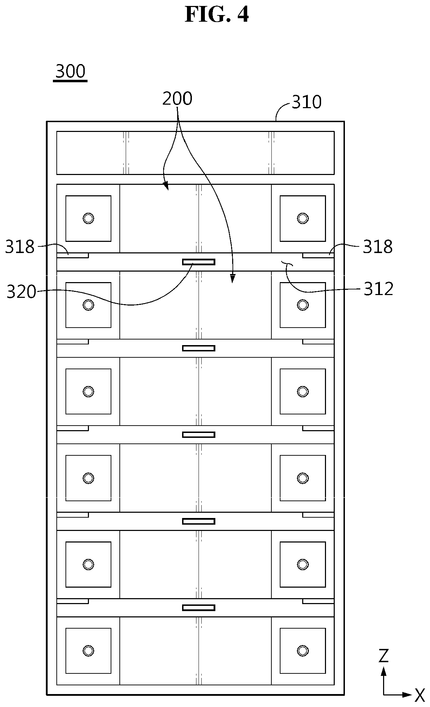

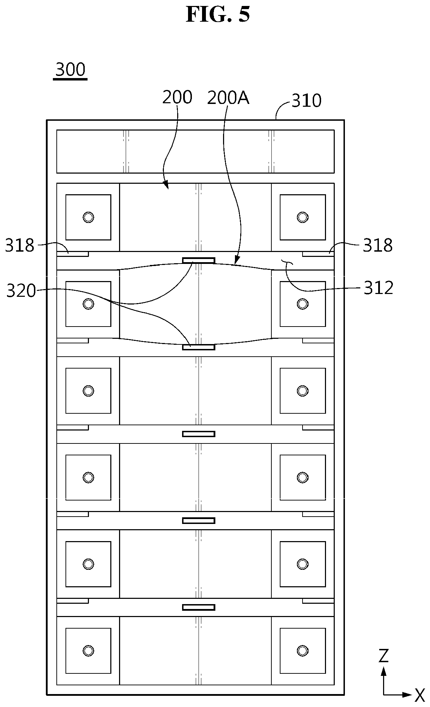

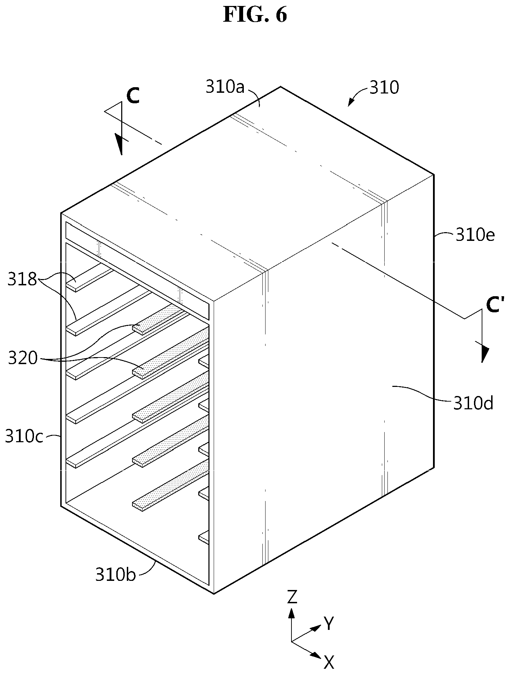

FIG. 4 is a schematic front view of the battery rack according to an embodiment of the present disclosure. FIG. 5 is a schematic front view showing volume expansion of a certain battery pack of the battery rack according to an embodiment of the present disclosure. Additionally, FIG. 6 is a schematic perspective view of the rack case of the battery rack according to an embodiment of the present disclosure.

Referring to FIGS. 4 to 6 together with FIG. 1, the rack case 310 of the present disclosure may have the plurality of battery packs 200 vertically mounted at intervals therein. The rack case 310 may have a receiving space 312 with an open structure to place the plurality of battery packs 200 in vertical communication with one another. For example, the rack case 310 may have an outer side wall that forms the receiving space 312. The outer side wall may include an upper wall 310a, a lower wall 310b, a left side wall 310c, a right side wall 310d and a rear wall 310e.

Additionally, a plurality of rack plates 318 vertically arranged may be provided on each of the inner surface of the left side wall 310c and the inner surface of the right side wall 310d in the receiving space 312 of the rack case 310. The plurality of battery packs 200 may be vertically arranged at a predetermined interval in the plurality of rack plates 318. The rack plates 318 arranged on the left and right sides may have an open structure therebetween to place the plurality of battery packs 200 in vertical communication with one another. This open structure allows for smooth vertical movement of air flowing between the battery packs 200.

When the volume of a certain battery pack 200A expands, the receiving space 312 may include at least one stopper 320 configured to suppress the volume expansion of the battery pack 200A as shown in FIG. 5. For example, the stopper 320 may be disposed between the plurality of battery packs 200. The stopper 320 may be spaced apart from the plurality of battery packs 200 in the vertical direction (Z-axis direction). For example, the stopper 320 may be disposed below the battery pack 200 disposed above and disposed above the battery pack 200 disposed below among the plurality of battery packs 200.

In addition, since the battery pack 200 includes the plurality of pouch-type secondary batteries 110 therein, when abnormal behaviors such as thermal runaway or a fire occur in the plurality of pouch-type secondary batteries 110 during the charge/discharge of the battery pack 200, a larger amount of gas is generated in the plurality of pouch-type secondary batteries 110, causing volume expansion of the pouch-type secondary battery 110, and as a consequence, the shape of the battery pack 200A may be expanded and deformed by the internal pressure. In this instance, the stopper 320 of the present disclosure may be configured to suppress the volume expansion of the battery pack 200 in the downward or upward direction as shown in FIG. 5.

According to this configuration of the present disclosure, the rack case 310 of the present disclosure includes the plurality of battery packs 200, and the rack case 310 having the receiving space 312 with the open structure in which the plurality of battery packs 200 is vertically mounted at intervals and placed in vertical communication with one another, wherein the stopper 320 is provided in the receiving space 312 and configured to suppress the volume expansion of any battery pack 200A, so when the size of the battery pack 200 is deformed by the volume expansion of the plurality of secondary batteries 110 in the battery pack 200 due to thermal runaway or a fire, the stopper 320 may suppress the contact of the deformed battery pack 200A with other battery pack 200 disposed above or below, thereby preventing the spread of the thermal runaway or fire to other battery pack 200 due to the heat transfer from the battery pack 200A in which the thermal runaway or fire occurred to the adjacent battery pack 200.

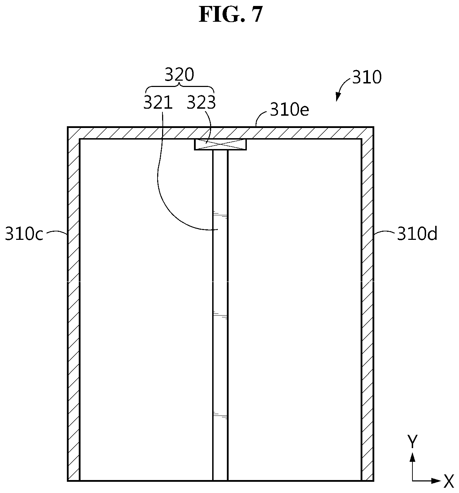

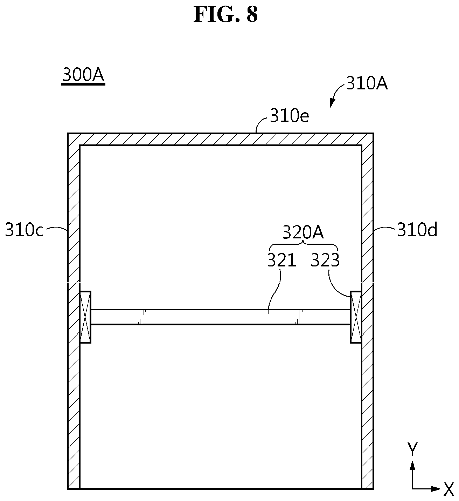

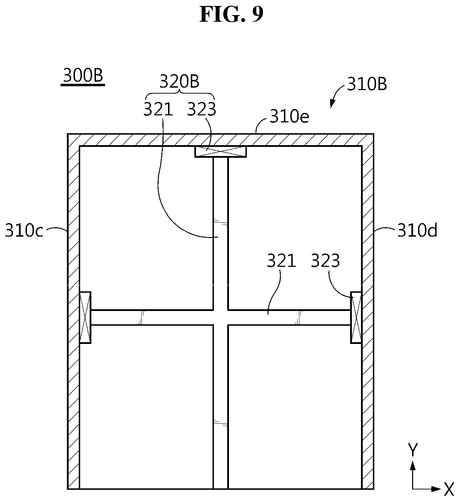

FIG. 7 is a horizontal cross-sectional view taken along the line C-C' in FIG. 6, showing the components of the battery rack. FIG. 8 is a horizontal cross-sectional view of components of a battery rack according to a second embodiment of the present disclosure. Additionally, FIG. 9 is a horizontal cross-sectional view of components of a battery rack according to a third embodiment of the present disclosure.

Here, FIGS. 7 to 9 show only the outer side wall of the rack case 310 and the stopper 320 for convenience of description of the drawings.

Referring to FIG. 7 together with FIGS. 4 and 6, the stopper 320 of the present disclosure may be in the shape of a beam that horizontally extends from at least one of the left side wall 310c, the right side wall 310d or the rear wall 310e. For example, as shown in FIG. 7, the stopper 320 may be in the shape of a hexagonal beam that extends forward from the inner surface of the rear wall 310e of the rack case 310. Although FIG. 7 shows one stopper 320, at least three stoppers 320 may be horizontally arranged.

Referring to FIG. 8 together with FIGS. 4 and 6, the stopper 320A of the battery rack 300A according to the second embodiment may be in the shape of a beam that extends from the inner surface of the left side wall 310c of the rack case 310A to the inner surface of the right side wall 310d. That is, the stopper 320A may have an I-shaped beam shape on the plane. The stopper 320A of FIG. 8 according to the second embodiment of the present disclosure is connected to the inner surface of each of the left side wall 310c and the right side wall 310d of the rack case 310A, and thus exerts a stronger force to suppress the deformed battery pack 200 than the stopper 320 of FIG. 7 connected to only the rear wall 310e of the rack case 310A.

Referring to FIG. 9 together with FIGS. 4 and 6, the stopper 320B of the battery rack 300B according to the third embodiment may have a crisscross shape of a hexagonal beam that extends forward from the inner surface of the rear wall 310e of the rack case 310B and an I-shaped beam that extends from the inner surface of the left side wall 310c of the rack case 310B to the inner surface of the right side wall 310d.

Accordingly, the stopper 320B of FIG. 9 according to the third embodiment of the present disclosure has the crisscross shape of the hexagonal beam connected to the rear wall 310e and the I-shaped beam connected to the left side wall 310c and the right side wall 310d of the rack case 310B, and thus may have more connected parts than the stopper 320A connected to the left side wall 310c and the right side wall 310d according to the second embodiment. Accordingly, the stopper 320B of FIG. 9 may exert a stronger force to suppress the deformed battery pack 200 than the stopper 320A of FIG. 8.

Referring to FIG. 7 again together with FIGS. 4 and 6, the stopper 320 may include a body portion 321 and a fixing portion 323. The body portion 321 may be configured to press the battery pack 200 when the volume of the battery pack 200 expands. For example, the body portion 321 may be disposed at a corresponding location to the center at which the battery pack 200 may deform with the highest possibility.

Additionally, the fixing portion 323 may be coupled to at least one of the rear wall 310e, the left side wall 310c or the right side wall 310d. For example, referring to FIG. 7, the stopper 320 of FIG. 7 includes the body portion 321 at a corresponding location to the central axis of the battery pack 200 in the front-rear direction, and the fixing portion 323 may be coupled with the inner surface of the rear wall 310e of the rack case 310. In this instance, weld coupling or bolt coupling may be used.

Referring to FIG. 8, the stopper 320A of FIG. 8 includes the body portion 321 at a corresponding location to the central axis of the battery pack 200 in the left-right direction, and the fixing portion 323 may be formed on each of the inner surface of the left side wall 310c of the rack case 310 and the inner surface of the right side wall 310d.

Referring to FIG. 9, the stopper 320B of FIG. 9 includes the body portion 321 at corresponding locations to the central axis of the battery pack 200 in the front-rear direction and the central axis in the left-right direction, and the fixing portion 323 may be coupled to each of the inner surface of the rear wall 310e of the rack case 310, the inner surface of the left side wall 310c and the inner surface of the right side wall 310d.

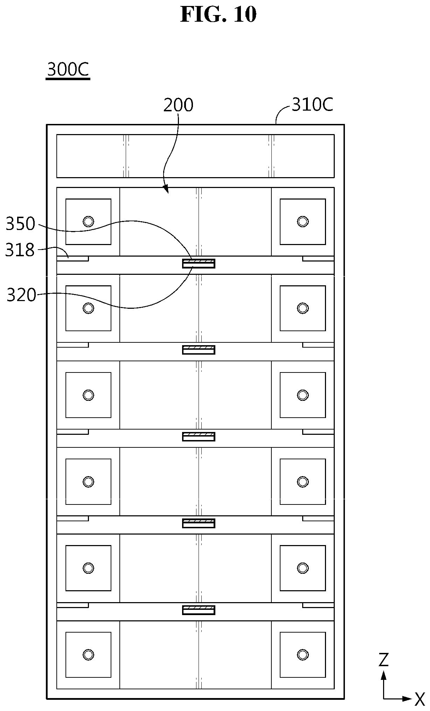

FIG. 10 is a schematic front view of a battery rack according to a fourth embodiment of the present disclosure.

Referring to FIG. 10, the rack case 310C of the battery rack 300C according to the fourth embodiment may further include a heat shield pad 350. The heat shield pad 350 may be disposed on or under the stopper 320. For example, the heat shield pad 350 may be attached to the upper surface of the stopper 320 using an adhesive (not shown). The heat shield pad 350 may include a heat shielding material, for example, heat resistant resin such as polyimide, a fibrous material such as glass wool or mineral wool, and/or a ceramic material.

According to this configuration of the present disclosure, the rack case 310C of the present disclosure further includes the heat shield pad 350 disposed on or under the stopper 320 to block the thermal conduction, so the heat shield pad 350 may suppress the heat transfer from the battery pack 200 in which thermal runaway or a fire occurred to other battery pack 200 disposed above or below.

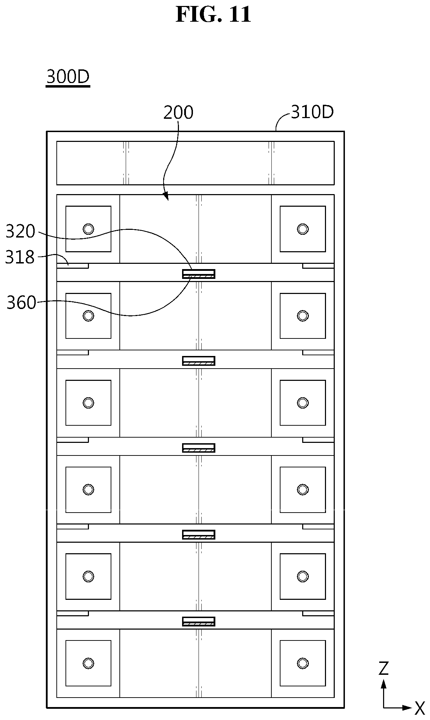

FIG. 11 is a schematic front view of a battery rack according to a fifth embodiment of the present disclosure.

Referring to FIG. 11, the rack case 310D of the battery rack 300D according to the fifth embodiment of the present disclosure may further include a cooling pad 360 on or under the stopper 320. The cooling pad 360 may be configured to absorb heat. For example, the cooling pad 360 may include a refrigerant (not shown) which evaporates when it absorbs heat. For example, the refrigerant may be water, a Freon-based refrigerant, ammonia, acetone, methanol, ethanol, naphthalene, sulfur or mercury.

According to this configuration of the present disclosure, the rack case 310D of the present disclosure further includes the cooling pad 360 disposed on or under the stopper 320 and configured to absorb heat, so the cooling pad 360 absorbs heat generated from the battery pack 200 in which thermal runaway or a fire occurred, thereby suppressing the heat transfer to the other battery pack 200 disposed above.

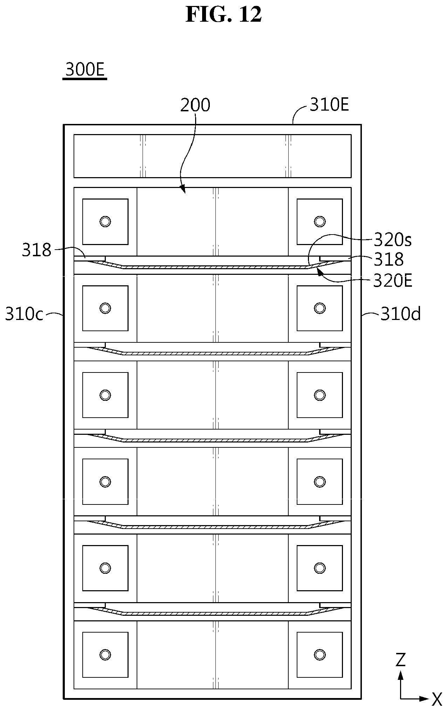

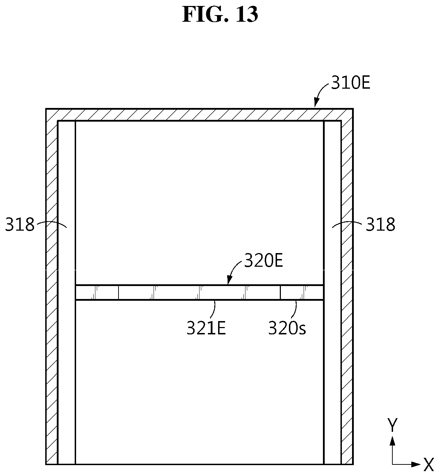

FIG. 12 is a schematic front view of a battery rack according to a sixth embodiment of the present disclosure. FIG. 13 is a horizontal cross-sectional view of the components of the battery rack according to the sixth embodiment of the present disclosure. Here, for convenience of description of the drawings, FIG. 13 shows parts of the outer side wall of the battery rack, the rack plate and the stopper.

Referring to FIGS. 12 and 13, the rack case 310E of the battery rack 300E according to the sixth embodiment of the present disclosure includes a plurality of rack plates 318. Each of the plurality of rack plates 318 may be configured to support the bottom of each of the plurality of battery packs 200 upwards. For example, as shown in FIG. 12, a pair of rack plates 318 may be coupled to the inner surface of the left side wall 310c of the rack case 310E and the inner surface of the right side wall 310d respectively. In this instance, two lower ends of one battery pack 200 may be respectively mounted on the pair of rack plates 318. The rack case 310E may include the total of ten rack plates 318 to mount five battery packs 200 at a predetermined interval.

Additionally, as shown in FIG. 13, the stopper 320E of the rack case 310E according to the sixth embodiment of the present disclosure may include a body portion 321E connected to the rack plate 318. The stopper 320E may have a step structure 320s that is stepped down from the rack plate 318 at a predetermined distance apart from the battery pack 200 mounted on the rack plate 318. For example, as shown in FIG. 12, the stopper 320E may have the step structure 320s that is stepped down on the left and right sides with respect to the center of the body portion 321E.

According to this configuration of the present disclosure, the present disclosure includes the body portion 321E of the stopper 320E connected to the rack plate 318 and the step structure 320s that is stepped down, so the stopper 320E may elastically suppress the expansion of the battery pack 200 by the step structure 320s and exert a stronger downward force.

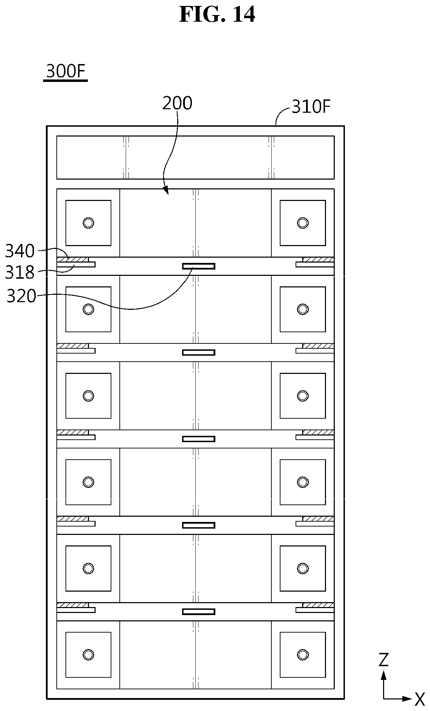

FIG. 14 is a schematic front view of a battery rack according to a seventh embodiment of the present disclosure.

Referring to FIG. 14, the rack case 310F of the battery rack 300F according to the seventh embodiment may further include a base member 340 having a predetermined vertical thickness. The base member 340 may be interposed between the lower surface of the battery pack 200 and the rack plate 318. For example, as shown in FIG. 14, two base members 340 may be disposed on the upper surface of two rack plates 318 arranged on the left and right sides. The battery pack 200 may be mounted on the upper surface of the two base members 340.

Additionally, the base member 340 may be configured to change the phase from solid to liquid at a predetermined temperature or above. For example, a representative example of the phase change material of the base member 340 may be paraffin which is low-priced and easy to adjust the phase change temperature according to the molecular weight. However, the phase change material is not necessarily limited thereto. The paraffin may be configured to change the phase at 90°C to 200°C (for example, paraffin 163, USA).

The base member 340 may cause a phase change when it absorbs the generated heat when thermal runaway or a fire occurs in the battery pack 200. When the phase changes from solid to liquid, the phase changed part of the base member 340 may leak out of a space between the rack plate 318 and the battery pack 200. Accordingly, the base member 340 may become thinner with the increasing quantity of phase change. Additionally, with the decreasing vertical thickness of the base member 340, the position of the battery pack 200 may be gradually lowered. That is, the base member 340 melts away by heat generated from the battery pack 200, and accordingly, the position of the battery pack 200 is lowered, thereby reducing the top of the battery pack 200 from moving up due to the volume expansion of the battery pack 200.

According to this configuration of the present disclosure, the rack case 310F according to another embodiment of the present disclosure further includes the base member 340 interposed between the lower surface of the battery pack 200 and the rack plate 218 and configured to change the phase from solid to liquid at the predetermined temperature or above, so when thermal runaway or a fire occurs in any of the plurality of battery packs 200, the base member becomes thinner due to the generated heat to move down the position of the battery pack 200 in which thermal runaway or the fire occurred. Accordingly, it is possible to prevent the contact of the battery pack 200 of which volume expanded due to thermal runaway or the fire with the adjacent battery pack 200, thereby effectively reducing the quantity of thermal conduction. Ultimately, when thermal runaway or a fire occurs in any battery pack 200, it is possible to prevent the spread of thermal runaway or the fire to the adjacent battery pack 200.

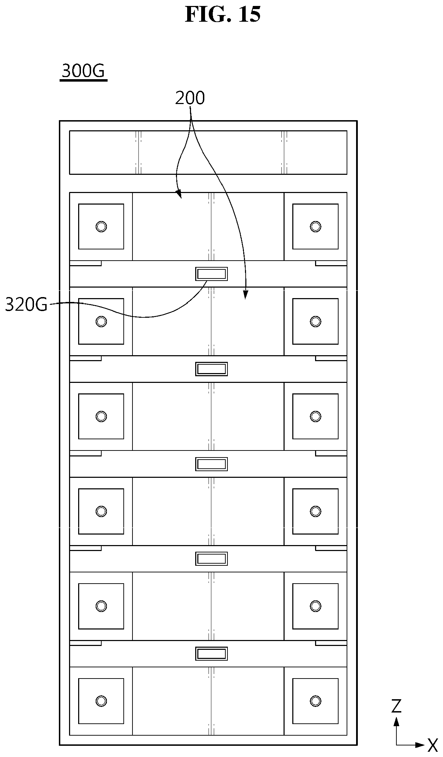

FIG. 15 is a schematic front view of a battery rack according to an eighth embodiment of the present disclosure.

Referring to FIG. 15, the stopper 320G of the battery rack 300G of FIG. 15 may be in the shape of a beam having a rectangular vertical cross section. That is, the stopper 320G may have a hollow tubular shape.

Accordingly, the stopper 320G of FIG. 15 according to the present disclosure is in the shape of a beam having the rectangular vertical cross section, so when contacting the battery pack, the volume expansion of the battery pack may be suppressed by the top or bottom of the stopper 320G, and an air gap may be formed through the hollow internal space, thereby effectively reducing the heat transfer to the adjacent battery pack.

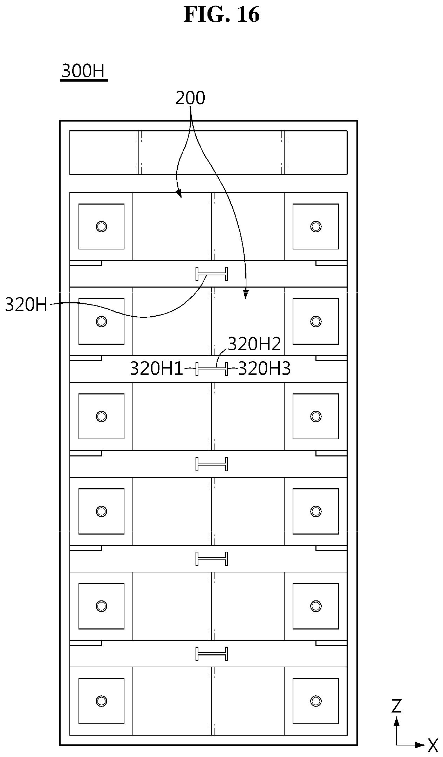

FIG. 16 is a schematic front view of a battery rack according to a ninth embodiment of the present disclosure.

Referring to FIG. 16, the stopper 320H of the battery rack 300H according to the ninth embodiment may be in the shape of a beam having an H shaped vertical cross section. That is, the stopper 320H may have an H-steel shape. Specifically, the stopper 320H may include a left plate 320H1 that vertically extends, a horizontal plate 320H2 that horizontally extends from the left plate 320H1 and is placed on the ground, and a right plate 320H3 that vertically extends from the right end of the horizontal plate 320H2.

Accordingly, the stopper 320H of FIG. 16 according to the present disclosure is in the shape of a beam having the H-shaped vertical cross section, so when contacting the battery pack 200, the volume expansion of the battery pack 200 may be suppressed by the top or bottom of the left plate 320H1 and the right plate 320H3 of the stopper 320H, and an air gap may be formed through an empty space between the left plate 320H1 and the right plate 320H3, thereby effectively reducing the heat transfer to the adjacent battery pack 200.

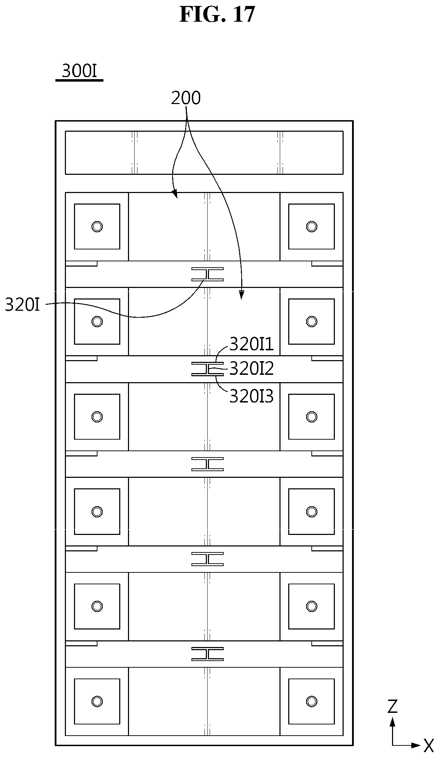

FIG. 17 is a schematic front view of a battery rack according to a tenth embodiment of the present disclosure.

Referring to FIG. 17, the stopper 3201 of the battery rack 3001 of FIG. 17 may be in the shape of a beam having an I-shaped vertical cross section. Specifically, the stopper 3201 may include an upper plate 32011 that horizontally extends, a middle plate 32012 that extends down from the upper plate 32011 and stands in a direction perpendicular to the ground, and a lower plate 32013 that horizontally extends from the lower end of the middle plate 32012.

Accordingly, the stopper 3201 of the battery rack 3001 of FIG. 17 according to the present disclosure is in the shape of a beam having the I-shape vertical cross section, so when contacting the battery pack 200, the volume expansion of the battery pack 200 may be suppressed by the top of the upper plate 32011 of the stopper 3201 or the bottom of the lower plate 32013, and an air gap may be formed through an empty space between the upper plate 32011 and the lower plate 32013, thereby effectively reducing the heat transfer to the adjacent battery pack 200.

Referring back to FIG. 1, the battery rack 300 may include a rack BMS on top of the plurality of battery packs 200. Here, the rack BMS may be a battery management system for central control of the charge/discharge of the plurality of battery packs 200 provided in the battery rack 300.

An electronic storage system (not shown) according to the present disclosure may include at least one battery rack 300 according to the present disclosure. In particular, the electronic storage system may include a plurality of battery racks 300 according to the present disclosure. The plurality of battery racks 300 may be electrically connected to one another through a rack busbar (not shown). The electronic storage system according to the present disclosure may be built in various forms, for example, a smart grid system or an electric charging station.

Hereinafter, the present disclosure is described in more detail by specifically describing comparative example and example, but the present disclosure is not limited to comparative example and example. The example/embodiment of the present disclosure may be modified into many other forms, and the scope of the present disclosure should not be interpreted as being limited to the following example/embodiment. The example/embodiment of the present disclosure is provided to help those skilled in the art to understand the present disclosure fully and completely.

### <Comparative example>

The battery rack according to comparative example of the present disclosure includes two battery packs, and a rack case in which the two battery packs are vertically arranged at intervals. In this instance, of the two battery packs, a heat shield member having the vertical thickness of 6 mm is placed on the lower surface of the battery pack disposed on the upper position.

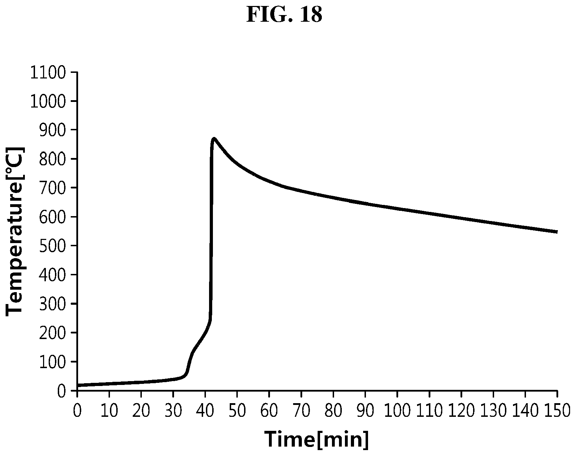

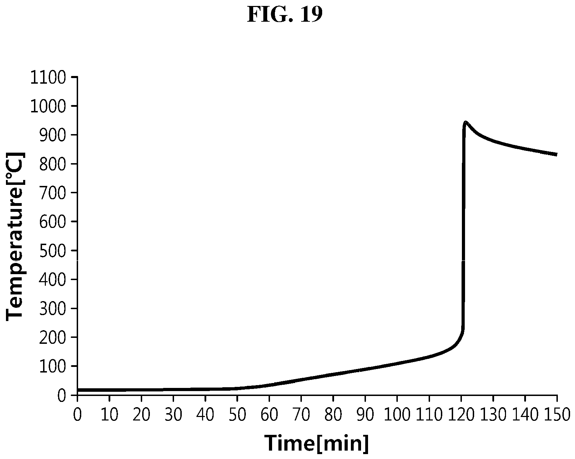

Subsequently, thermal runaway is intentionally induced by an electrical short circuit in the secondary batteries embedded in the battery pack disposed on the lower position. Due to the volume expansion of the secondary batteries in which the thermal runaway occurred, the battery pack swells and its volume expands, and the upper surface of the expanded battery pack comes into close contact with the heat shield member disposed on the lower surface of the upper battery pack. In comparative example, after the induced electrical short circuit of the secondary batteries of the lower battery pack, the temperature of each of the two battery packs is measured during the total of 150 minutes, and the experimental results are shown in FIGS. 18 and 19. In this instance, FIG. 18 is a graph showing temperature changes of the battery pack in which thermal runaway occurred. FIG. 19 is a graph showing temperature changes of the upper battery pack.

### <Example>

In the same way as comparative example, in example of the present disclosure, a battery rack is prepared, including two battery packs and a rack case in which the two battery packs are vertically arranged at intervals. In this instance, a heat shield having the vertical thickness of 6 mm is placed on the lower surface of the battery pack disposed at the upper position among the two battery packs.

However, as opposed to comparative example, in example of the present disclosure, the rack case further includes a stopper. The stopper has a plate shape that is elongated in the front-rear direction and is interposed between the two battery packs to suppress the volume expansion of the battery pack when the volume of the lower battery pack expands as shown in FIGS. 5 and 6. In this instance, the distance from the lower surface of the stopper to the lower surface of the heat shield member is set to 2.8 mm.

Subsequently, of the two battery packs, thermal runaway is intentionally induced in the lower battery pack. As opposed to comparative example, as shown in FIG. 5, the lower battery pack in which thermal runaway occurred has volume expansion, but the volume expansion of the battery pack is suppressed by the stopper provided in the rack case.

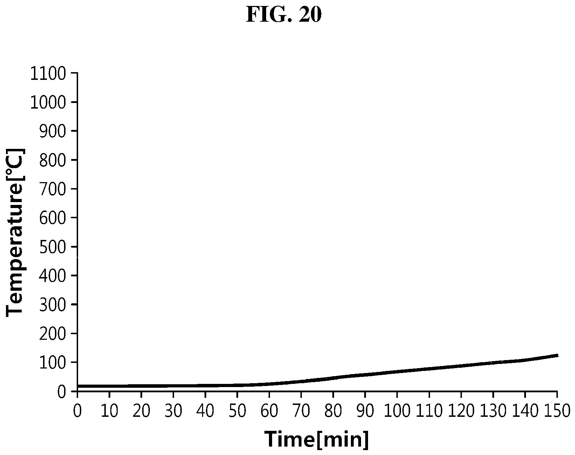

Since the battery rack according to example of the present disclosure suppresses the volume expansion of the lower battery pack by the stopper, the lower battery pack may be kept apart at 2.8 mm from the heat shield member. After an electrical short circuit of the secondary batteries of the lower battery pack is induced, the temperature of the battery packs of example is measured during the total of 150 minutes. The lower battery pack in which thermal runaway occurred shows temperature changes similar to the graph showing temperature changes of FIG. 18. Temperature changes of the upper battery pack are shown in FIG. 20.

As a result of experiment, in comparative example, as shown in FIG. 18, the temperature of the battery pack subjected to thermal runaway rapidly increased from about 40 minutes and reached about 900°C. As shown in FIG. 19, from about 40 minutes, the temperature of the battery pack gradually rises by the transfer of heat generated from the battery pack subjected to thermal runaway to the upper battery pack. Subsequently, from about 120 minutes, it appears that the temperature rose above 900°C due to thermal runaway occurred in the secondary batteries of the upper battery pack.

In contrast, in example, as shown in FIG. 20, it appears that some of heat is transferred from the battery pack in which thermal runaway occurred to the upper battery pack, and the temperature gradually rises from about 60 minutes and exceeds 100°C at about 150 minutes. That is, as opposed to the battery rack of comparative example, the upper battery pack of the battery rack of example does not have a rapid temperature rise. It is because the battery rack of example of the present disclosure has the 2.8 mm thick air gap between the two battery packs by the stopper, and the heat shielding effect is exerted by the air gap, thereby preventing the temperature from rising high enough to cause thermal runaway in the upper battery pack. Accordingly, the battery rack of the present disclosure includes the stopper provided in the rack case, thereby effectively preventing thermal runaway propagation between the plurality of battery packs.

The terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the equivalent scope of the appended claims.

### [Description of Reference Numerals]

| | | | |
|---|---|---|---|
| 300: | Battery rack | | |
| 200: | Battery pack | 100: | Cell assembly |
| 110: | Secondary battery | 210: | Pack housing |
| 310: | Rack case | 312: | Receiving space |
| 320: | Stopper | 321, 323: | Body portion, Fixing portion |
| 310a, 310b, 310c, 310d, 310e: | Upper wall, Lower wall, Left side wall, Right side wall, and Rear wall | | |
| 350: | Heat shield pad | 360: | Cooling pad |
| 318: | Rack plate | 230: | Module BMS |
| 320s: | Step structure | | |
| 340: | Base member | 221: | External I/O terminal |

## Claims

1. A battery rack, comprising:
a plurality of battery packs; and
a rack case having a receiving space with an open structure in which the plurality of battery packs is vertically mounted at intervals and placed in vertical communication with one another, wherein a stopper is provided in the receiving space and disposed between the plurality of battery packs, spaced apart from the plurality of battery packs, and is configured to suppress volume expansion of the battery pack when the volume of the battery pack expands.

2. The battery rack according to claim 1, wherein the rack case includes an upper wall, a lower wall, a left side wall, a right side wall and a rear wall to form the receiving space.

3. The battery rack according to claim 2, wherein the stopper has a beam shape horizontally extending from at least one of the left side wall, the right side wall or the rear wall.

4. The battery rack according to claim 3, wherein the stopper has the beam shape having a rectangular, I-shaped or H-shaped vertical cross section.

5. The battery rack according to claim 2, wherein the stopper includes a body portion configured to press the battery pack when the volume of the battery pack expands, and a fixing portion coupled to at least one of the rear wall, the left side wall or the right side wall.

6. The battery rack according to claim 5, wherein the rack case further includes a plurality of rack plates configured to support a bottom of each of the plurality of battery packs upwards.

7. The battery rack according to claim 6, wherein the body portion of the stopper is connected to the rack plate and has a downward stepped structure.

8. The battery rack according to claim 6, wherein the rack case further includes a base member interposed between a lower surface of the battery pack and the rack plate and configured to change a phase from solid to liquid at a predetermined temperature or above.

9. The battery rack according to claim 1, wherein the rack case further includes a heat shield pad disposed on or under the stopper to block thermal conduction.

10. The battery rack according to claim 1, wherein the rack case further includes a cooling pad disposed on or under the stopper to absorb heat.

11. An energy storage system comprising at least one battery rack according to any one of claims 1 to 10.
